# EUROPÄISCHE PATENTANMELDUNG

(11) **EP 3 081 717 A2**
(43) Veröffentlichungstag der Anmeldung: **19.10.2016**
(21) Anmeldenummer: 16164918.1
(22) Anmeldetag: 12.04.2016
(51) Int. Cl.: E04G 21/08, H02H 3/33

(54) **VORRICHTUNG ZUM VERDICHTEN EINES WERKSTOFFS**

(30) Priorität: 17.04.2015 DE 102015105861
(71) Anmelder: Laier, Manfred, 79761 Waldshut-Tiengen (DE)
(72) Erfinder: Laier, Manfred, 79761 Waldshut-Tiengen (DE)
(74) Vertreter: Patentanwälte und Rechtsanwalt Weiß, Arat & Partner mbB

(57) **Zusammenfassung**

Bei einer Vorrichtung zum Verdichten eines Werkstoffes, insbesondere von Beton, mittels einer Rüttelflasche (1), die über eine Steuerelektronik (3) mit einem Netz verbunden ist, soll sich in der Steuerelektronik (3) eine Einrichtung (15) zum galvanischen Trennen der Rüttelflasche (1) von dem Netz befinden.

## Beschreibung

Die Erfindung betrifft eine Vorrichtung zum Verdichten eines Werkstoffes, insbesondere von Beton, mittels einer Rüttelflasche, die über eine Steuerelektronik mit einem Netz verbunden ist.

### Stand der Technik

Um eine hohe Druckfestigkeit zu erreichen, werden bestimmte Werkstoffe, insbesondere Beton oder Estrich, im Laufe der Verarbeitung verdichtet. Hierzu werden sogenannte Rüttelflaschen eingesetzt, in denen sich Hochfrequenz-Innenvibratoren befinden. Diese werden in Schwingung versetzt, die auf die Umgebung der Rüttelflasche übertragen wird. Derartige Innenvibratoren (auch Innenrüttler genannt) sind beispielsweise aus der DE 19 14 589 U, DE 23 19 946 A, DE 23 50 697 A1 und DE 22 33 235 A bekannt. Die hervorgerufenen Schwingungen geben Stösse unmittelbar an den Werkstoff, in den der Innenvibrator eingetaucht wird, ab. Dadurch entweicht Luft aus dem Werkstoff und die Druckfestigkeit steigt nach Verfestigung des Werkstoffs durch das verminderte Porenvolumen an.

Die Bewegung von Rüttler-Unwuchten, erfolgt bei herkömmlichen Innenvibratoren in der Regel durch angekoppelte Elektro- oder Verbrennungsmotoren und erzeugt Rüttelfrequenzen von ca. 200 Hz. Die Schwingungen werden im Inneren der Rüttelflasche dadurch erzeugt, dass sich eine exzentrisch angeordnete Masse als rotierende Unwucht bewegt. Diese erzeugt von der Drehzahl abhängige Zentrifugalkräfte, die in radialer Richtung zur Rüttelflasche an den Werkstoff abgegeben werden. Je nach System können diese Unwuchten als Pendelklöppel ausgebildet, in einer gelagerten Welle integriert, an einer Welle montiert oder eine durch Druckluftspeisung oder elektromagnetische Feldkraft abrollende Unwucht sein. All diese Schwindungserreger motivieren eine beliebig geartete Drehbewegung, durch die ein in sich starrer Rüttelkörper zu Kreisschwingungen um seine Längsachse angelegt wird. Die Richtung der Schwingungserregung ist somit stets senkrecht zur Längsachse des Rüttelkörpers.

Die vorliegende Erfindung verwendet zum Betrieb des Vibrators in der Rüttelflasche einen Elektromotor. Ein Schalter zum Ein- und Ausschalten des Elektromotors befindet sich üblicherweise in oder an einer Steuereinrichtung zwischen einem Netzstecker und der Rüttelflasche. Dabei ist ein elektrischer Umformer vorgesehen, um die auf der Baustelle anliegende Wechselspannung gleichzurichten. Aus der gleichgerichteten Spannung wird eine Wechselspannung mit höherer Frequenz (z.B. 200 Hz) gewonnen, indem die Ausgangsklemmen mit Hilfe von Schaltern oder Zerhackern abwechselnd und periodisch, bei Drehstrom zusätzlich um 120° fasenversetzt und verkettet, mit der Gleichspannungsquelle verbunden werden. Die Umschaltung erfolgt durch elektronische Bauelemente mehrmals pro Periode der Ausgangsspannung mit einer hohen Frequenz.

Wegen der rauhen Betriebsbedingungen auf Baustellen müssen der Frequenzumformer und der Transformator in einem stabilen Gehäuse untergebracht werden. Trotz Verwendung elektronischer Bauelemente ist noch heute diese Stromversorgung schwer, gross und unhandlich, so dass die Handhabung auf der Baustelle nicht uneingeschränkt möglich ist.

Aus der DE 200 17 054 U1 ist bekannt, dass die Energieversorgung des Vibrators über ein schutzisoliertes Steckernetzteil erfolgt, mit dem eine galvanische Trennung vom Starkstromnetz vorgenommen wird. Die Energieversorgung des Elektromotors geschieht vorteilhaft über ein einfaches Netzteil, mit dem zugleich die galvanische Trennung vom Starkstromnetz erfolgt. Das Anschlusskabel vom Netzteil zum Umformer führt somit nur eine ungefährliche Kleinspannung. Dadurch werden Gefährdungen des Bedienungspersonals durch elektrischen Stromschlag, z.B. bei einer Beschädigung des Anschlusskabels, vermieden. Das mit der gefährlichen Netzspannung betriebene Netzteil befindet sich bei dieser Anordnung immer ausserhalb des eigentlichen Arbeitsbereiches des Vibrators. Damit unterscheidet sich diese Anordnung aber nicht wesentlich von einem dem Netzanschluss vorgeschalteten FI-Schutzschalter.

Des weiteren sind die bis heute bekannten Umformer fix eingestellt, d.h., es wird keine Rücksicht auf die Grösse der Rüttelflasche genommen. Sie sind meist so ausgelegt, dass die grösste Rüttelflasche ohne Schwierigkeiten betrieben werden kann. Damit sind sie aber für kleinere Rüttelflaschen weit überdimensioniert.

### Aufgabe

Der vorliegenden Erfindung liegt die Aufgabe zugrunde, eine Vorrichtung der o.g. Art bezüglich der Sicherheit, der vielfältigeren Anwendbarkeit und der Handhabbarkeit zu verbessern.

### Lösung der Aufgabe

Zur Lösung der Aufgabe führt zum einen, dass sich in der Steuerelektronik eine Einrichtung zum glavanischen Trennen der Rüttelflasche von dem Netz befindet.

Das bedeutet, dass die galvanische Trennung nicht etwa weit weg von der Steuerelektronik, nämlich durch ein dem Netzschalter vorgeschalteten FI-Schalter oder durch ein in dem Netzanschluss integrierten Schalter erfolgt, sondern direkt an der Steuerelektronik, welche den harten Bedingungen auf der Baustelle ausgesetzt ist. Damit ist die Reaktionszeit wesentlich verkürzt und eine verbesserte Sicherheit für das Bedienpersonal gewährleistet.

In einem bevorzugten Ausführungsbeispiel handelt es sich bei der Einrichtung zum galvanischen Trennen der Rüttelflasche von dem Netz um einen FI-Schalter. Hierbei erfolgt die Trennung durch Relaiskontakte, welche die Stromversorgung bei Überspannung oder Unterspannung unterbrechen. Die Stromversorgung wird dabei von einem Summenstromwandler mit einem entsprechenden Wandlerbauteil überwacht, das mit einer FI-Auswertung verbunden ist. Diese FI-Auswertung steuert dann entsprechend dem Ergebnis die Relaiskontakte.

Bevorzugt ist die Einrichtung zum galvanischen Trennen der Rüttelflasche von dem Netz einem Ein-/Ausschalter nachgeordnet, welcher sich direkt in oder an dem Gehäuse mit der Steuerelektronik befindet.

Ein weiterer Erfindungsgedanke, für den separat Schutz begehrt wird, bezieht sich darauf, dass sich in der Steuerelektronik ein Spannungswandler befindet. Mit diesem Spannungswandler wird eine Drehzahl konstant auf einen vorgegebenen Wert, beispielsweise 12.000 U/min, geregelt. Bei den bisher bekannten Steuerungen war eine Drehzahl fest eingestellt, unabhängig davon, welche Grösse der Rüttelflasche mit entsprechender Dimensionierung der Unwucht usw. betrieben wurde. Bei einer erheblichen Motorbelastung brach dann die Drehzahl ein, so dass gewünschte Vibrationsleistungen nicht mehr erreicht wurden. Die vorliegende Erfindung bewirkt nun eine Regelung des Spannungswandlers in der Weise, dass die Drehzahl konstant auf dem vorgegebenen Wert bleibt. Diese konstante Drehzahl wird auch bei Netzspannungsschwankungen eingehalten.

Bei einem bevorzugten Ausführungsbeispiel ist dem entsprechenden Spannungswandler ein Prozessor zugeordnet, der ein Speicherelement beinhaltet, in dem die einzelnen Werte für unterschiedliche Motoren festgelegt sind. Beispielsweise kann es sich bei dem Speicherelement um ein RFID-EEProm handeln. Dieses Speicherelement kann durch einen beliebigen Sender von aussen angesprochen werden, beispielsweise ist es denkbar, dass die entsprechenden Motorkennzahlen oder Kennziffern in einem Handy des Bedienpersonals festgelegt sind, so dass die Steuerelektronik direkt mit Hilfe des Handys auf die Werte für den Motor in einer anderen Rüttelflasche umgepolt wird, sofern es zu einem Wechsel auf der Baustelle kommt.

Des weiteren soll in der Steuerelektronik auch eine Temperaturüberwachung integriert sein. Diese ist bevorzugt mit dem Prozessor verbunden und führt z.B. zu einem Abschalten des Motors bei Überschreiten einer bestimmten Temperaturgrenze.

Ferner ist daran gedacht, der Steuerelektronik einen auslesbaren Betriebsstundenzähler zuzuordnen. Dieser kann insbesondere als Beweismittel für Garantiefälle dienen, da in der Regel bei Verkauf der erfindunsgemässen Einrichtung auch eine Garantie für eine bestimmte Lebensdauer gegeben wird.

Ein weiterer Erfindungsgedanke bezieht sich darauf, dass sich elektronische Bauelemente der Steuerelektronik in einem austauschbaren Träger befinden. Dies hat den Vorteil, dass diese Bauelemente schnell ausgetauscht werden können. Z.B. ist es denkbar, dass auf der Baustelle ein Ersatzträger mit den entsprechenden Bauelementen parat gehalten wird, sofern der eingesetzte Träger mit den elektronischen Bauelementen bzw. diese selbst ausfallen.

In einem bevorzugten Ausführungsbeispiel wird der Träger in eine Gehäusewanne eingesetzt. Dabei wird zwischen Träger und Gehäusewanne eine Wärmeleitpaste eingebracht, die dazu führt, dass die von dem elektronischen Bauelement erzeugte Wärme nach aussen abgeleitet wird.

Hierdurch wird die Temperaturführung wesentlich verbessert.

Ferner ist daran gedacht, den Träger nicht fest über Schraubenbolzen od. dgl. mit der Gehäusewanne zu verbinden, sondern einfach nur in das Innere der Gehäusewanne einzusetzen. Die Gehäusewanne wird dann mit einem Deckel verschlossen, wobei zwischen dem Deckel und der Gehäusewanne ein Einsatz eingelegt wird, durch den der Träger auf den Boden der Gehäusewanne aufgedrückt wird. Bei diesem Einsatz kann z.B. ein Hartgummi Verwendung finden. Dies hat natürlich auch zur Folge, dass die Elektronik schwingend gelagert ist. D.h., sie ist wesentlich weniger den mechanischen Stössen ausgesetzt und kann weniger geschädigt werden.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
**Figur 1** eine Draufsicht auf eine Vorrichtung zum Verdichten eines Werkstoffs;
**Figur 2** ein Schaltbild einer Steuerelektronik der Vorrichtung gemäss Figur 1;
**Figur 3** eine Draufsicht auf die geöffnete Steuerelektronik gemäss Figur 1;
**Figur 4** einen Querschnitt durch die Steuerelektronik gemäss Figur 3.

Eine erfindungsgemässe Vorrichtung zum Verdichten von Werkstoffen, insbesondere von Beton, weist eine Rüttelflasche 1 auf, die über ein Kabel 2 mit einer Steuerelektronik 3 verbunden ist. Die Steuerelektronik 3 wiederum besitzt ein Verbindungskabel 4 zu einem Netzstecker 5. Auf der Oberseite der Steuerelektronik 3 ist ein Ein-/Ausschalter 6 zu erkennen.

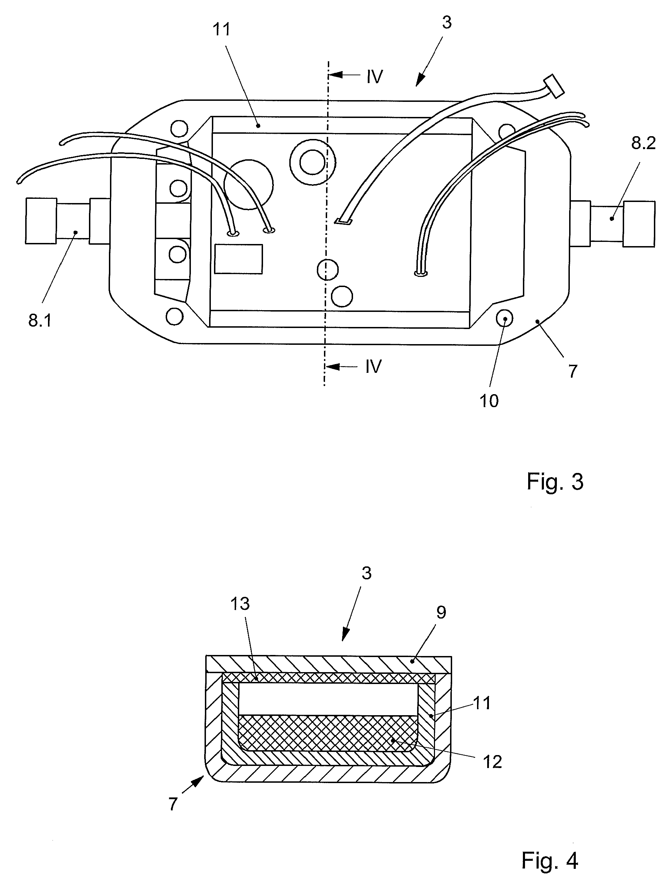

Gemäss den Figuren 3 und 4 weist die Steuerelektronik 3 eine Gehäusewanne 7 auf, die sich gegenüberliegend jeweils einen Anschluss 8.1 bzw. 8.2 an das Verbindungskabel 4 bzw. das Kabel 2 besitzt. Die Gehäusewanne 7 kann von einem Deckel 9 verschlossen werden, was z.B. durch entsprechende Schraubenbolzen geschieht, die in Gewindebohrungen 10 in der Gehäusewanne 7 eingreifen.

In die Gehäusewanne 7 wird ein auswechselbarer Träger 11 eingesetzt, welcher eine entsprechende Steuerungselektronik aufnimmt. Dabei ist der Träger 11 etwa U-förmig ausgebildet. Die Bauteile der Steuerung liegen in einer Vergussmasse 12.

Zwischen dem Deckel 9 und dem Träger 11 ist ein Einsatz 13 vorgesehen, der beispielsweise aus Hartgummi bestehen kann. Unter dem Träger 11 befindet sich bevorzugt eine Wärmeleitpaste, so dass die beim Betrieb entstehende Wärme der Elektronik nach aussen abgeführt wird.

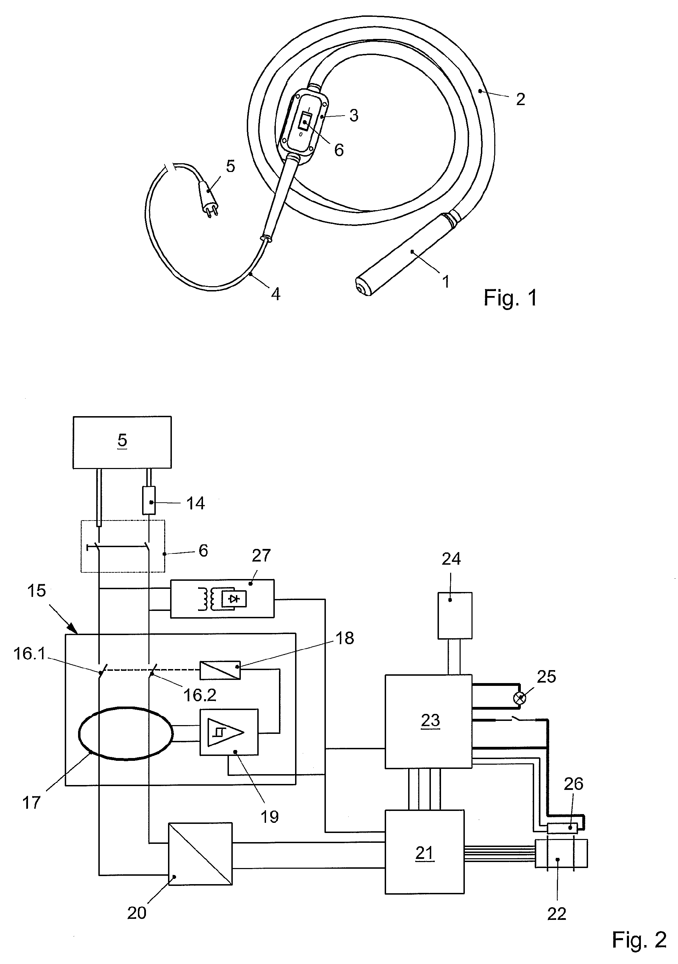

Gemäss Figur 2 wird die Elektronik in der Steuerelektronik 3 mit Energie über den Netzstecker 5 versorgt. Dabei befindet sich zwischen dem Netzstecker 5 und dem Schalter 6 bevorzugt eine Schmelzsicherung 14 (8A) als Ganzbereichsabsicherung gegen Überlast und Kurzschluss.

Auf den Schalter 6 folgt ein FI-Schalter 15 mit der Möglichkeit einer kompletten Netztrennung über Relaiskontakte 16.1 und 16.2. Die entsprechende Überwachung dieser Relaiskontakte 16.1 und 16.2 erfolgt über einen Summenstromwandler 17 mit entsprechendem Wandlerbauteil 19 und eine FI-Auswertung 18.

Auf den FI-Schalter folgt ein Gleichrichter 20 und auf diesen eine entsprechende Spannungsversorgung 21 für einen Motor 22 bzw. Rütteleinheit in der Rüttelflasche 1.

Zwischen dem Schalter 6 und dem FI-Schalter 15 zweigt von den Netzleitungen ein Spannungswandler 27 ab. Dieser Spannungswandler 27 ist mit einem Prozessor 23, mit dem Wandlerbauteil 19 und der Spannungsversorgung 21 verbunden und versorgt diese Elemente mit Energie bzw. der notwendigen Kleinspannung. Zur entsprechenden Auswahl der Energie für die Spannungsversorgung ist der Prozessor 23 mit einem entsprechenden Speicherelemente 24 verbunden, welches beispielsweise ein RFID-EEProm sein kann.

Der Betrieb des Prozessors 23 wird durch eine entsprechende LED 25 angezeigt. Ferner ist der Prozessor 23 mit einem Sicherungselement 26 verbunden, welches ermittelt, ob die Rütteleinheit 22 zu heiss wird.

Die Funktionsweise der Steuerelektronik ist folgende:

Durch einen beliebigen Sender, der beispielsweise auch in einem Handy integriert sein kann, wird dem Speicherelement 24 mitgeteilt, welcher Betriebsstrom bzw. Anlaufstrom für den gegebenen Motor gewünscht wird. Je nach Flaschengrösse sind diese Parameter folgende:

| **Flaschengrösse** | **Ø 35 mm** | **Ø 42 mm** | **Ø 51 mm** | **Ø 57 mm** | **Ø 68 mm** |
|---|---|---|---|---|---|
| Maximaler Betriebsstrom | 3A | 4A | 5A | 5A | 5A |
| Maximaler Anlaufstrom | 5A | 6A | 6A | 6A | 6A |

Der gewünschte Strom wird der Spannungsversorgung 21 mitgeteilt, welche diesen gewünschten Strom der Rütteleinheit 22 übermittelt. Dies geschieht bevorzugt über eine sogenannte feldorientierte Regelung (field orientated control = FOC), mit der eine Drehzahl konstant auf einen gewünschten Wert geregelt werden kann, d.h., es wird keine feste Drehzahl eingestellt. Bei den bisher bekannten Steuerungen ist die Drehzahl bei einer höheren Motorbelastung eingebrochen, so dass die gewünschte Vibrationsleistung nicht mehr erreicht wurde. Die Vorteile der FOC-Regelung sind ein höherer Wirkungsgrad und geringe Drehmomentschwankungen auch bei einer Veränderung der Motorbelastung. Auch bei Netzspannungsschwankungen wird hierdurch eine konstante Drehzahl eingehalten.

Bei einem Fehlerstrom spricht der FI-Schalter 15 an, der diese über den Summenstromwandler 17 erfasst. Wird ein Fehlerstrom durch den FI-Auswerter 18 festgestellt, wird der Motor durch die Relaiskontakte 16.1 und 16.2 vollständig vom Netz getrennt. Damit findet eine galvanische Trennung statt. Eine weitere galvanische Trennung ist in dem Spannungswandler 27 vorgesehen.

**Bezugszeichenliste**

| | | | | | |
|---|---|---|---|---|---|
| 1 | Rüttelflasche | 34 | | 67 | |
| 2 | Kabel | 35 | | 68 | |
| 3 | Steuerelektronik | 36 | | 69 | |
| 4 | Verbindungskabel | 37 | | 70 | |
| 5 | Netzstecker | 38 | | 71 | |
| 6 | Ein-/Ausschalter | 39 | | 72 | |
| 7 | Gehäusewanne | 40 | | 73 | |
| 8 | Anschluss | 41 | | 74 | |
| 9 | Deckel | 42 | | 75 | |
| 10 | Gewindebohrung | 43 | | 76 | |
| 11 | Träger | 44 | | 77 | |
| 12 | Vergussmasse | 45 | | 78 | |
| 13 | Einsatz | 46 | | 79 | |
| 14 | Schmelzsicherung | 47 | | | |
| 15 | FI-Schalter | 48 | | | |
| 16 | Relaiskontakte | 49 | | | |
| 17 | Summenstromwandler | 50 | | | |
| 18 | FI-Auswertung | 51 | | | |
| 19 | Wandlerbauteil | 52 | | | |
| 20 | Gleichrichter | 53 | | | |
| 21 | Endstufe/Spannungsversorgung | 54 | | | |
| 22 | Rütteleinheit/Motor | 55 | | | |
| 23 | Prozessor | 56 | | | |
| 24 | Speicherelement | 57 | | | |
| 25 | LED | 58 | | | |
| 26 | Sicherungselement | 59 | | | |
| 27 | Spannungswandler | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Vorrichtung zum Verdichten eines Werkstoffes, insbesondere von Beton, mittels einer Rüttelflasche (1), die über eine Steuerelektronik (3) mit einem Netz verbunden ist,
**dadurch gekennzeichnet,**
**dass** sich in der Steuerelektronik (3) eine Einrichtung (15) zum galvanischen Trennen der Rüttelflasche (1) von dem Netz befindet.

2. Vorrichtung zum Verdichten eines Werkstoffes, insbesondere von Beton, mittels einer Rüttelflasche (1), die über eine Steuerelektronik (3) mit einem Netz verbunden ist, **dadurch gekennzeichnet, dass** der Steuerelektronik (3) eine veränderbare Endstufe/Spannungsversorgung (21) zugeordnet ist.

3. Vorrichtung zum Verdichten eines Werkstoffes, insbesondere von Beton, mittels einer Rüttelflasche (1), die über eine Steuerelektronik (3) mit einem Netz verbunden ist, **dadurch gekennzeichnet, dass** sich elektronische Bauelemente in einem austauschbaren Träger (11) befinden.

4. Vorrichtung nach Anspruch 3, **dadurch gekennzeichnet, dass** der Träger (11) U-förmig ausgestaltet ist.

5. Vorrichtung nach Anspruch 3 oder 4, **dadurch gekennzeichnet, dass** die elektronischen Bauelemente in dem Träger (11) vergossen sind.

6. Vorrichtung nach wenigstens einem der Ansprüche 3 bis 5, **dadurch gekennzeichnet, dass** der Träger (11) austauschbar in eine Gehäusewanne (7) eingesetzt ist und ggf. zwischen Träger (11) und Gehäusewanne (7) eine Wärmeleitpaste eingebracht ist.

7. Vorrichtung nach wenigstens einem der Ansprüche 3 bis 6, **dadurch gekennzeichnet, dass** auf den Träger (11) ein Einsatz (13) aufgelegt ist, der von einem Deckel (9) mit Druck beaufschlagbar ist.

8. Vorrichtung nach wenigstens einem der vorhergehenden Ansprüche,
**dadurch gekennzeichnet, dass** die Einrichtung zum galvanischen Trennen der Rüttelflasche (1) von dem Netz ein FI-Schalter (15) ist.

9. Vorrichtung nach Anspruch 8, **dadurch gekennzeichnet, dass** die Trennung durch Relaiskontakte (16.1, 16.2) erfolgt.

10. Vorrichtung nach Anspruch 9, **dadurch gekennzeichnet, dass** der FI - Schalter (15) einen Summenstromwandler (17) mit Wandlerbauteil (19) und eine FI- Auswertung (18) aufweist, welche den Relaiskontakten (16.1, 16.2) zugeordnet ist.

11. Vorrichtung nach wenigstens einem der vorhergehenden Ansprüche,
**dadurch gekennzeichnet, dass** die Einrichtung (15) zum galvanischen Trennen der Rüttelflasche (1) von dem Netz einem Ein-/Ausschalter (6) nachgeordnet ist.

12. Vorrichtung nach wenigstens einem der vorhergehenden Ansprüche,
**dadurch gekennzeichnet, dass** die Endstufe (21) mit einem Prozessor (23) verbunden ist, dem ein Speicherelement (24) mit Betriebsstromparametern für unterschiedliche Motoren/Rütteleinheiten (22) zum Betreiben von unterschiedlichen Rüttelflaschen (1) zugeordnet ist, wobei das Speicherelement (24) ein RFID EEProm ist.

13. Vorrichtung nach wenigstens einem der vorhergehenden Ansprüche,
**dadurch gekennzeichnet, dass** die Steuerelektronik (3) eine Temperaturüberwachung aufweist.

14. Vorrichtung nach Anspruch 13, **dadurch gekennzeichnet, dass** ein Sicherungselement (26) zur Erfassung der Temperatur dem Prozessor (23) zugeordnet ist.

15. Vorrichtung nach wenigstens einem der vorhergehenden Ansprüche,
**dadurch gekennzeichnet, dass** der Steuerelektronik (3) und insbesondere dem Prozessor (23) ein auslesbarer Betriebsstundenzähler zugeordnet ist.
